Europäisches Patentamt

European Patent Office

Office européen des brevets

(11) Numéro de publication: **0 380 400 A1**

## (12) DEMANDE DE BREVET EUROPEEN

(21) Numéro de dépôt: **90400174.0**

(22) Date de dépôt: **22.01.90**

(51) Int. Cl.⁵: **G07C 9/00, G01V 9/04, H03K 17/94**

(30) Priorité: **20.01.89 FR 8900702**

(43) Date de publication de la demande:
**01.08.90 Bulletin 90/31**

(84) Etats contractants désignés:
**AT BE CH DE DK ES FR GB GR IT LI LU NL SE**

(71) Demandeur: **RASEC, Société Anonyme**
**5, Rue des Pruniers**
**F-41200 Romorantin(FR)**

(72) Inventeur: **Cesar, Jean**
**77, rue de Gy**
**F-41200 Romorantin(FR)**

(74) Mandataire: **Casalonga, Axel et al**
**BUREAU D.A. CASALONGA - JOSSE**
**Morassistrasse 8**
**D-8000 München 5(DE)**

(54) **Dispositif et procédé de contrôle électronique de sens de passage de clients dans l'entrée d'un magasin.**

(57) Le dispositif de sécurité pour contrôler électroniquement le sens de déplacement de mobiles dans un passage (1) comprend au moins une paire d'émetteurs (7 et 8; 9 et 10) unidirectionnels d'ondes électromagnétiques coopérant chacun avec un récepteur (11, 12; 13, 14) d'ondes électromagnétiques pour former une barrière électromagnétique (A, B; C, D). Les émetteurs et récepteurs sont disposés de façon à rendre les barrières électromagnétiques sensiblement transversales audit passage et espacées l'une de l'autre dans un plan sensiblement horizontal. Les récepteurs sont reliés par paires à un discriminateur de sens (15; 16) connectés à une alarme (17; 18), de sorte que le déplacement d'un mobile dans ledit passage ne soit possible sans déclencher l'alarme que dans un sens déterminé pour franchir lesdites barrières électromagnétiques selon un ordre déterminé.

FIG.2

# DISPOSITIF ET PROCEDE DE CONTROLE ELECTRONIQUE DE SENS DE PASSAGE DE CLIENTS DANS L'ENTREE D'UN MAGASIN.

La présente invention concerne un dispositif de sécurité et un procédé pour contrôler électroniquement le sens de déplacement de mobiles dans un passage, notamment le sens de déplacement de clients dans l'entrée d'une surface de vente protégée d'un magasin.

De tels dispositifs de sécurité sont actuellement installés sous forme de portillons mécaniques ou électriques, ou de tourniquets utilisés dans les magasins ou autres bâtiments pour obliger le passage des clients uniquement dans le sens entrant de la surface de vente.

Les portillons mécaniques ne sont pas très pratiques. Ils forment un barrage à l'entrée des clients. Très souvent, on peut les ouvrir de l'intérieur du magasin, ce qui facilite le passage des clients frauduleux voulant sortir du magasin.

Les portillons électriques fonctionnent en général avec temporisation : après passage d'un client, le portillon est maintenu ouvert pendant un temps prédéterminé pendant lequel le client peut sortir facilitant ainsi le passage des voleurs sortant du magasin. Un tel système est fragile et sujet à des pannes fréquentes qui provoquent un blocage du portillon soit en position ouverte laissant indifféremment entrer et sortir les clients, soit en position fermée faisant un barrage aux clients voulant entrer.

Le système de tourniquets constitue également un barrage mécanique qui interdit par exemple l'entrée d'un client avec son chariot.

On voit donc que les portillons et tourniquets présentent de nombreux inconvénients du point de vue pratique pour des clients. Par ailleurs, de tels systèmes de contrôle ne satisfont pas pleinement aux exigences de sécurité en cas de sinistre, car ils forment toujours une barrière mécanique présentant une sécurité anti-panique incertaine.

La présente invention a pour objet de remplacer les portillons ou tourniquets classiques par un nouveau dispositif de sécurité pour équiper l'entrée d'une zone protégée telle que par exemple la zone de vente dans un magasin ou un bâtiment analogue.

Un autre objet de la présente invention est de supprimer les barrières mécaniques à l'entrée des zones de vente dans un magasin.

Un autre objet de l'invention est d'améliorer la sécurité antipanique du magasin.

L'invention a également pour objet un dispositif de sécurité fiable pour le contrôle d'une zone protégée.

L'invention a en outre pour objet de réaliser un dispositif de sécurité pour contrôler électroniquement le sens de déplacement des clients à l'entrée des zones de vente dans un magasin.

L'invention a enfin pour objet un procédé de contrôle électronique de sens de déplacement des clients à l'entrée des zones de vente dans un magasin.

Le dispositif de sécurité, selon l'invention, est destiné à contrôler électroniquement le sens de déplacement de mobiles dans un passage tel qu'une entrée de magasin sans barrière mécanique. Ce dispositif comprend au moins une paire d'émetteurs unidirectionnels d'ondes électromagnétiques coopérant chacun avec un récepteur d'ondes électromagnétiques pour former une barrière électromagnétique.

Les émetteurs et récepteurs sont disposés de façon à rendre les barrières électromagnétiques sensiblement transversales au passage et espacées l'une de l'autre dans un plan sensiblement horizontal. Les récepteurs sont liés par paire à un discriminateur de sens qui est connecté à une alarme, de sorte que le déplacement d'un mobile, par exemple une personne, dans ledit passage, ne soit possible sans déclencher l'alarme, que dans un sens déterminé de franchissement desdites barrières électromagnétiques selon un ordre précis.

Selon un mode de réalisation préféré de l'invention, le dispositif de sécurité comprend deux paires de barrières électromagnétiques disposées respectivement au voisinage des deux extrémités dudit passage. Les discriminateurs correspondants sont de préférence reliés entre eux. Chaque discriminateur de sens peut être associé à un moyen de temporisation pour remettre à zéro le discriminateur de sens. Les deux alarmes correspondant respectivement aux deux paires de barrières électromagnétiques sont de préférence respectivement du type sonore et lumineux.

De façon avantageuse, les barrières électromagnétiques sont constituées par des rayons de lumière invisible, par exemple des rayons infrarouges. Le dispositif peut comprendre un comparateur pour chaque barrière électromagnétique, de façon à pouvoir comparer les signaux entre l'émetteur et le récepteur correspondant et à envoyer un signal résultant au discriminateur de sens correspondant.

De préférence, le dispositif de sécurité comprend un oscillateur connecté à un diviseur pour fournir des signaux de demi-alternances, les premières demi-alternances servant à alimenter les premières barrières électromagnétiques et les secondes demi-alternances pour les deuxièmes barrières électromagnétiques appariées avec les premières barrières électromagnétiques.

On peut contrôler électroniquement le sens de déplacement de mobiles dans un passage dénué d'obstacle mécanique, par exemple une entrée de magasin, en mettant en oeuvre les étapes suivantes du procédé de l'invention : on génère en permanence au moins une paire de faisceaux d'ondes électromagnétiques formant barrières électromagnétiques sensiblement transversales au passage et espacées l'une de l'autre dans un plan sensiblement horizontal; on associe un discriminateur de sens à ladite paire de barrières électromagnétiques; on détermine le sens de déplacement du mobile qui franchit les barrières électromagnétiques dans un ordre précis; et on déclenche une alarme sonore ou lumineuse, éventuellement un barrage mécanique sous forme de porte lorsque le sens de déplacement du mobile dans le passage est interdit.

L'invention sera mieux comprise à l'étude de la description détaillée d'un mode de réalisation préféré de l'invention à titre d'exemple nullement limitatif et illustrée par les dessins annexés, sur lesquels :

la figure 1 est une vue schématique d'une entrée de magasin équipé d'un dispositif de sécurité selon l'invention;

la figure 2 est un schéma synoptique du dispositif de sécurité selon l'invention; et

la figure 3 est un schéma plus détaillé du mode de réalisation de la figure 2.

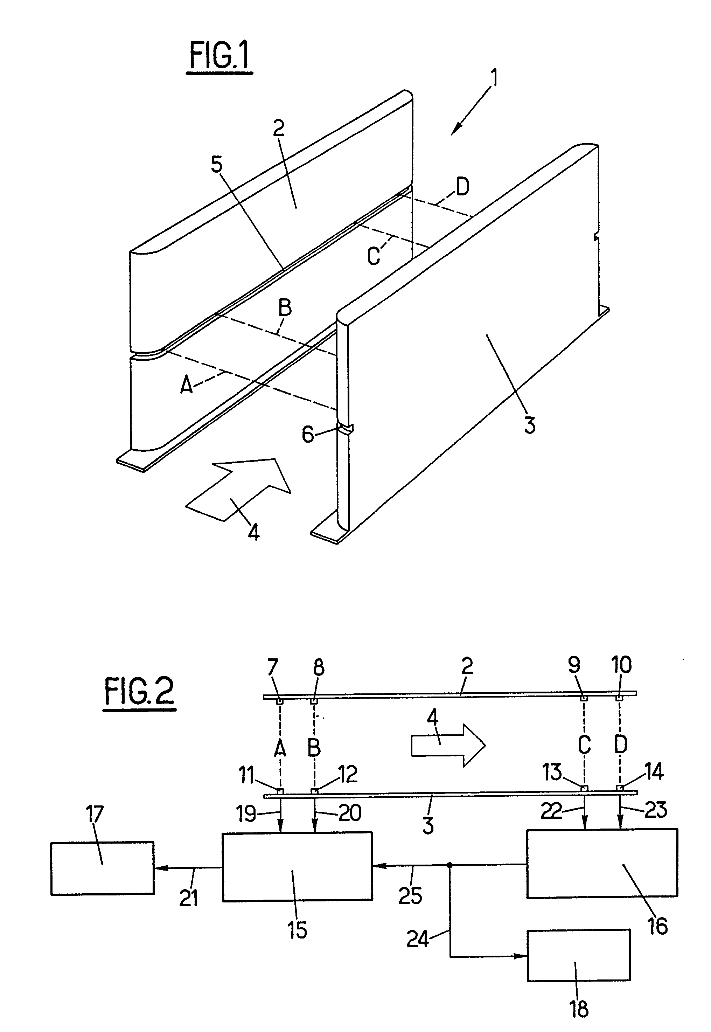

La figure 1 montre schématiquement une installation constituant un passage d'entrée dans une zone protégée de vente d'un magasin et comportant un dispositif de sécurité selon l'invention. Un passage obligatoire 1 est délimité par deux panneaux de côté 2 et 3 verticaux et parallèles. La flèche 4 désigne le sens normal du déplacement autorisé d'un client dans le passage 1. Les panneaux de côté 2 et 3 sont pourvus chacun d'une rainure 5 ou 6 horizontale. Les rainures sont en regard l'une de l'autre et munies chacune de quatre trous regroupés par paires et disposés au voisinage des deux extrémités du passage 1.

Grâce à des émetteurs et récepteurs d'ondes électromagnétiques dissimulés dans l'épaisseur des panneaux 2 et 3, on obtient quatre faisceaux électromagnétiques A, B, C, D formant des barrières électromagnétiques transversales au passage 1, espacées l'une de l'autre dans un plan sensiblement horizontal. Ces barrières électromagnétiques sont regroupées en deux paires A, B et C, D situées au voisinage des extrémités du passage 1.

Si le client se déplace dans le sens de la flèche 4 à travers le passage 1, c'est-à-dire dans le sens d'entrée par exemple, il franchit successivement et dans l'ordre les barrières électromagnétiques A, B, C et D. Le dispositif de sécurité reconnaît le sens de déplacement autorisé et laisse le client traverser le passage 1.

En revanche, si le client passe dans le sens inverse de la flèche 4, c'est-à-dire dans le sens interdit du passage 1, il franchit successivement et dans l'ordre les barrières électromagnétiques D, C, B et A. Le dispositif de sécurité émet alors un premier avertissement sous forme d'un signal lumineux par exemple, lorsque le client a franchi successivement les barrières D et C. Si le client ignore le signal lumineux et continue dans ce sens pour franchir ensuite les barrières électromagnétiques dans l'ordre B et A, le dispositif de sécurité émet alors un deuxième avertissement qui est par exemple du type sonore.

On voit bien que le dispositif de l'invention permet de contrôler le sens de déplacement d'un client dans le passage 1, en l'absence de toute sorte de barrières mécaniques, tout en assurant une meilleure sécurité. De plus, le passage 1 est ainsi rendu très facile d'accès.

Bien entendu, ce qui importe le plus pour un tel système de sécurité est la disposition des barrières électromagnétiques. La structure et la forme des éléments servant de support à ces barrières électromagnétiques peuvent être quelconques, par exemple constituées par des barres horizontales parallèles prolongées par des portiques pour rendre le système plus accueillant vis-à-vis des clients. Les émetteurs et récepteurs électromagnétiques sont de préférence dissimulés dans les éléments de support de façon à pouvoir émettre à travers les trous des rainures 5 et 6.

La figure 2 montre schématiquement les moyens électroniques associés au dispositif de sécurité illustré sur la figure 1. Sur les panneaux 2 et 3 sont montés respectivement quatre émetteurs d'ondes électromagnétiques 7, 8, 9, 10 et quatre récepteurs d'ondes électromagnétiques 11, 12, 13, 14 constituant respectivement les barrières électromagnétiques A, B, C et D. Le dispositif comprend en outre deux discriminateurs de sens 15, 16 et deux alarmes 17 et 18 respectivement du type sonore et lumineux.

Les signaux de sortie des récepteurs 11 et 12 sont transmis, par l'intermédiaire des connexions 19 et 20 respectivement, au discriminateur de sens 15 qui est relié par la connexion 21 à l'alarme sonore 17. Les signaux de sortie des récepteurs 13 et 14 sont transmis par l'intermédiaire des connexions 22 et 23 respectivement, au discriminateur de sens 16 qui est relié par la connexion 24 à l'alarme lumineuse 18 et est relié par la connexion 25 au discriminateur de sens 15.

L'ordre dans lequel sont franchies les barrières électromagnétiques est détecté par les récepteurs 11, 12, 13 et 14 qui émettent des signaux aux discriminateurs de sens 15, 16. Chaque discriminateur de sens 15, 16 peut fonctionner de façon indépendante pour déclencher l'alarme correspondante 17, 18.

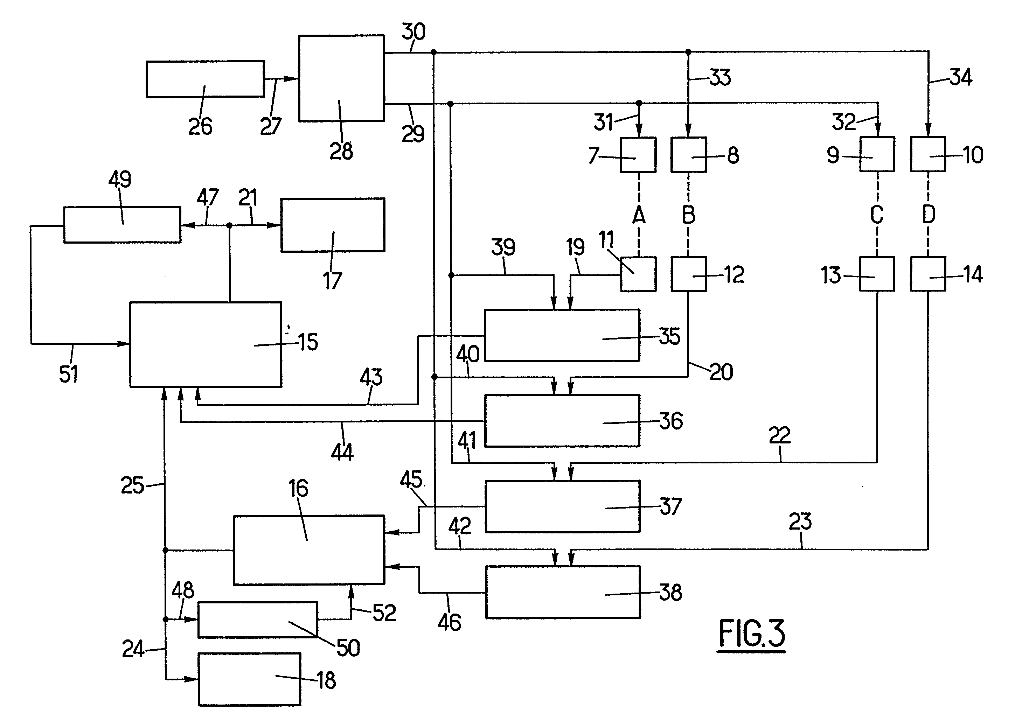

Comme on le voit plus en détail sur la figure 3 qui illustre une réalisation pratique possible, les moyens électroniques associés au dispositif de sécurité comprennent un oscillateur 26 qui génère un signal électrique alternatif. Cet oscillateur est relié par la connexion 27 à un diviseur 28 dont les deux sorties 29, 30 fournissent chacune un signal de demi-alternances. Pour chaque paire de barrières électromagnétiques A, B ou C, D, les premières demi-alternances alimentent, par l'intermédiaire des connexions 31 et 32, la première barrière A ou C et les secondes demi-alternances alimentent, par l'intermédiaire des connexions 33, 34, la seconde barrière électromagnétique B ou D.

Les barrières électromagnétiques A, B, C et D sont connectées respectivement aux comparateurs 35, 36, 37 et 38 qui comparent respectivement les signaux d'entrée des émetteurs 7, 8, 9, 10 et les signaux de sortie des récepteurs correspondants 11, 12, 13 et 14 par l'intermédiaire respectivement des connexions 39 et 19, 40 et 20, 41 et 22, 42 et 23.

Les sorties des comparateurs 35 et 36, correspondant respectivement aux barrières électromagnétiques A et B, sont reliées, par l'intermédiaire des connexions 43 et 44, au discriminateur de sens 15. Les comparateurs 37 et 38, correspondant respectivement aux barrières électromagnétiques C et D, sont connectés, par l'intermédiaires des connexions 45 et 46, au discriminateur au sens 16. Les discriminateurs de sens 15 et 16 sont connectés respectivement par les liaisons 47 et 48 à des moyens de temporisation 49 et 50 pour remettre à zéro, par des connexions 51 et 52 respectivement lesdits discriminateurs de sens après un temps prédéterminé.

Les barrières électromagnétiques A, B, C et D étant équivalentes les unes aux autres, il suffit alors de décrire le fonctionnement de l'une d'elles, par exemple la barrière électromagnétique A, pour comprendre le fonctionnement des autres barrières électromagnétiques B, C et D.

La barrière électromagnétique A est constituée par un faisceau d'ondes électromagnétiques entre l'émetteur 7 et le récepteur correspondant 11. L'émetteur 7 est alimenté par un signal de demi-alternances émis par la sortie 29 du diviseur 28. Le même signal de demi-alternances, considéré comme signal de référence, alimente par l'intermédiaire de la connexion 39 le comparateur 35 qui est également alimenté, à l'aide de la connexion 19, par le signal de sortie du récepteur 11.

Si le faisceau d'ondes électromagnétiques n'est pas interrompu, le signal de sortie du récepteur 11 est cohérent avec le signal de référence. Dans ce cas, le comparateur 35 fournit un signal régulier au discriminateur de sens 15 par l'intermédiaire de la connexion 43. Lorsqu'un corps opaque interrompt le faisceau d'ondes électromagnétiques, le signal de sortie du récepteur 11 n'est plus cohérent avec le signal de référence. Le comparateur 35 délivre alors un signal particulier au discriminateur de sens 15 qui reconnaît l'interruption du faisceau d'ondes électromagnétiques formant la barrière électromagnétique A.

Quant au fonctionnement global du dispositif, il est identique à celui décrit sur les figures 1 et 2.

Les barrières électromagnétiques peuvent être constituées par des faisceaux lumineux visibles ou invisibles ou toute autre forme d'ondes électromagnétiques pouvant être interrompues par la présence d'un corps opaque.

L'exemple a été décrit pour un passage situé à l'entrée des zones de vente d'un magasin. Il est bien entendu que le dispositif de sécurité, ainsi que le procédé correspondant, pour contrôler électroniquement le sens de déplacement des mobiles, selon l'invention, peuvent être utilisés pour surveiller toute sorte de passages à sens unique.

## Revendications

1. Dispositif de sécurité pour contrôler électroniquement le sens de déplacement de mobiles dans un passage (1) tel qu'une entrée de magasin sans barrière mécanique, caractérisé par le fait qu'il comprend au moins deux paires d'émetteurs unidirectionnels d'ondes électromagnétiques (7 et 8; 9 et 10) coopérant chacun avec un récepteur d'ondes électromagnétiques (11, 12; 13, 14) pour former une barrière électromagnétique (A, B; C, D), lesdits émetteurs et récepteurs étant disposés de façon à rendre lesdites barrières électromagnétiques sensiblement transversales audit passage et espacées l'une de l'autre dans un plan sensiblement horizontal, lesdits récepteurs étant reliés par paire (11 et 12; 13 et 14) à un discriminateur de sens (15; 16) qui est connecté à une alarme (17; 18), de sorte que le déplacement d'un mobile dans ledit passage ne soit possible sans déclencher l'alarme que dans un sens déterminé (4) de franchissement desdites barrières électromagnétiques selon un ordre déterminé, lesdites paires de barrières électromagnétiques (A et B; C et D) étant disposées respectivement au voisinage des deux extrémités dudit passage (1), les discriminateurs de sens (15; 16) correspondants étant reliés entre eux.

2. Dispositif de sécurité selon la revendication 1, caractérisé par le fait que chaque discriminateur de sens (15; 16) est associé à un moyen de temporisation (49; 50) pour remettre à zéro ledit discriminateur de sens.

3. Dispositif de sécurité selon la revendication 1 ou 2, caractérisé par le fait que les deux alarmes (17; 18) correspondant respectivement aux deux paires de barrières électromagnétiques (A et B; C et D) sont respectivement du type sonore et lumineux.

4. Dispositif de sécurité selon l'une quelconque des revendications précédentes, caractérisé par le fait que les barrières électromagnétiques sont constituées par des rayons de lumière invisible.

5. Dispositif de sécurité selon l'une quelconque des revendications précédentes, caractérisé par le fait qu'il comprend un comparateur (35, 36; 37, 38) pour chaque barrière électromagnétique, de façon à pouvoir comparer les signaux entre l'émetteur et le récepteur correspondant et à envoyer un signal résultant au discriminateur de sens correspondant.

6. Dispositif de sécurité selon la revendication 5, caractérisé par le fait qu'il comprend un oscillateur connecté à un diviseur pour fournir des signaux de demi-alternances, les premières demi-alternances servant à alimenter les premières barrières électromagnétiques (A; C) et les secondes demi-alternances pour les deuxièmes barrières électromagnétiques (B; D) appariées avec les premières barrières électromagnétiques.

7. Dispositif de sécurité selon l'une quelconque des revendications précédentes, caractérisé par le fait qu'il comprend des moyens formant barrage mécanique pour le mobile dans le passage lorsque ledit mobile est en mouvement dans le sens interdit.

8. Procédé de contrôle électronique de sens de déplacement d'un mobilbe dans un passage dénué d'obstacle mécanique, par exemple une entrée de magasin, caractérisé par le fait qu'on génère en permanence au moins une paire de faisceaux d'ondes électromagnétiques formant barrières électromagnétiques (A et B; C et D) sensiblement transversales au passage et espacées l'une de l'autre dans un plan sensiblement horizontal; on associe un discriminateur de sens (15; 16) à ladite paire de barrières électromagnétiques; on détermine le sens de déplacement du mobile qui franchit les barrières électromagnétiques dans un ordre précis; on déclenche au moins une alarme (17; 18) et/ou un barrage mécanique lorsque le sens de déplacement du mobile se trouvant dans le passage est interdit.

FIG.1

FIG.2

FIG.3

EP 0 380 400 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | FR-A-2419549 (MATRA)<br>* page 2, ligne 7 - page 5, ligne 24; figures * | 1, 4, 8 | G07C9/00<br>G01V9/04<br>H03K17/94 |
| Y | | 2 | |
| A | | 3 | |
| | --- | | |
| Y | FR-A-2602894 (COMPANIE DES TRANSPORT DE BESANCON)<br>* page 3, ligne 26 - page 6, ligne 15; figures * | 2 | |
| A | | 1 | |
| | --- | | |
| A | DE-A-3405798 (BRÜDER SIEGEL GMBH)<br>* abrégé; revendications 1-7; figures * | 1-4, 8 | |
| | --- | | |
| A | US-A-4278878 (KATO)<br>* abrégé; colonne 2, lignes 30 - 51; figures * | 1, 8 | |
| | --- | | |
| A | US-A-4528679 (SHABAZ)<br>--- | | |
| A | PATENT ABSTRACTS OF JAPAN<br>vol. 8, no. 165 (P-291)(1602) 31 juillet 1984,<br>& JP-A-59 060586 (SUMITOMO DENKI KOGYO)<br>* le document en entier * | | **DOMAINES TECHNIQUES RECHERCHES (Int. Cl.5 )** |
| | --- | | |
| A | US-A-4499372 (NAKANO)<br>--- | | G07C<br>G07B<br>G07F<br>G06M<br>G08G<br>G06K<br>G01V<br>H03K<br>G08B |
| A | US-A-4180726 (DECRESENT)<br>----- | | |

Le présent rapport a été établi pour toutes les revendications

| Lieu de la recherche | Date d'achèvement de la recherche | Examinateur |
|---|---|---|
| LA HAYE | 01 MAI 1990 | MEYL D. |

EPO FORM 1503 03.82 (P0402)